# EUROPEAN PATENT SPECIFICATION

(11) **EP 4 205 430 B1**
(45) Date of publication and mention of the grant of the patent: **07.10.2026**
(21) Application number: 21762042.6
(22) Date of filing: 17.08.2021
(51) Int. Cl.: H04L 9/40, H04W 12/069, H04W 12/50, H04W 12/77

(54) **CONNECTION OF GUEST DEVICES TO A WIRELESS NETWORK**
VERBINDUNG VON GASTVORRICHTUNGEN MIT EINEM DRAHTLOSEN NETZWERK
CONNEXION DE DISPOSITIFS D'INVITÉS À UN RÉSEAU SANS FIL

(30) Priority: 27.08.2020 WO PCT/CN2020/111863
(43) Date of publication of application: 05.07.2023
(73) Proprietor: Koninklijke Philips N.V., 5656 AE Eindhoven (NL)
(72) Inventor: GE, Xin, 5656 AE Eindhoven (NL); ZHANG, Fengchang, 5656 AE Eindhoven (NL); GU, Hai, 5656 AE Eindhoven (NL); MA, Fulong, 5656 AE Eindhoven (NL)
(74) Representative: Philips Intellectual Property & Standards
(86) International application number: PCT/EP2021/072791
(87) International publication number: WO 2022/043124

(56) References cited:
- EP-A1- 3 530 020
- US-A1- 2015 229 475
- PEYTON: "How to Separate Guest Network 2.4 GHz and 5 GHz SSIDs on Netgear Orbi", 15 August 2019 (2019-08-15), XP055858817, Retrieved from the Internet <URL:https://www.youtube.com/watch?v=jRAcV0-A7jE> [retrieved on 20211108]
- HUGH AVER: "What's a guest Wi-Fi network, and why do you need one? | Kaspersky official blog", 7 September 2018 (2018-09-07), XP055858869, Retrieved from the Internet <URL:https://usa.kaspersky.com/blog/guest-wifi/16271/> [retrieved on 20211108]

## Description

### FIELD OF THE INVENTION

The present invention is generally related to wireless communications and, more particularly, to controlling connection of guest devices to a wireless network according to a device provisioning protocol (DPP).

### BACKGROUND OF THE INVENTION

Device provisioning protocol (DPP) is a device provisioning specification for network configuration of smart home devices. DPP defines how to establish device-to-device communication between a configurator and an enrollee.

By way of example, a secure connection may built between the configurator and enrollee by scanning a QR code of the enrollee device, which contains information which enables the building of said secure connection. For the enrollee device to then be connected to the wireless network using DPP, it requires network channel information. This information is typically communicated to the enrollee device from the configurator via the secure channel, which enables the enrollee device to complete the network connection process.

However, if this enrollee device is a guest device for which a temporary connection is desirable, there is a risk that the guest device stores the connection information permanently. This may enable the guest device to join the wireless network without permission at a later time, or may even enable the device to disclose the connection information to other devices which have not been connected to the network.

Thus, connecting guest devices to wireless networks can prove to be a security risk. Accordingly, there is a need to improve the means and method of connecting guest devices to wireless networks, which ensures that the network cannot be accessed permanently by devices which should not be able to do so.

Document US2015/229475 discloses using DPP to configure devices.

### SUMMARY OF THE INVENTION

The invention is defined by the claims.

According to examples in accordance with an aspect of the invention, there is provided an access point apparatus for facilitating connection of a guest device to a wireless network according to a device provisioning protocol, DPP, the access point apparatus comprising:
a channel module configured to support a plurality of network channels, wherein the plurality of network channels comprises an administrative channel and a guest channel; and
a communication module configured to receive a guest connection request from control apparatus via the administrative channel and, responsive to the guest connection request, to communicate guest connection information of the guest channel to the control apparatus via the administrative channel,
wherein the guest connection information comprises data for facilitating connection of the guest device to the wireless network via the guest channel.

Proposed concepts thus aim to provide schemes, solutions, concepts, designs, methods and systems pertaining to connection of a guest device to a wireless network according to a DPP. The proposed invention relates particularly to an access point (AP) for facilitating connection of a guest device to a wireless network through a guest channel. This is achieved by communicating the guest connection information to a control apparatus via a different channel from a guest channel, namely an administrative channel. During the initial connection request and communication of the guest connection information, there is no direct communication between the access point and the guest device. When the guest device receives the guest connection information, the guest device will have the capability to connect to the wireless network via the guest channel.

By configuring the access point to facilitate separate administrative and guest channels, alongside control apparatus, the guest device may only be given specific connection information for connecting to the network via a guest channel. This guest connection information will be communicated to the device by the control apparatus (i.e. a different device from the AP), so at no point do the access point and the guest device interact with each other before the guest device has guest connection information for connecting to the wireless network via the guest channel.

Typically, a guest device aiming to connect to a wireless network needs to obtain connection information in a secure manner in order to complete the device provisioning protocol. However, it is desirable for the guest device to be connected to the wireless network via only a guest channel. A solution to this problem is provided by employing an AP which can support a plurality of network channels simultaneously, including an administrative channel enabling a control apparatus to obtain guest connection information. Control apparatus can then receive guest connection information from the AP via the administrative channel and communicate the guest connection information to the guest device. The guest connection information enables the guest device to connect to the wireless network via the guest channel.

In this way, the control apparatus acts as an intermediary, such that guest connection information is obtained via the administrative channel, and subsequently communicated to the guest device (so that the guest device can then use the guest connection information to connect to the wireless network via the guest channel). This provides the advantage of improved security, because the guest device only communicates/interacts with the control apparatus prior to connection. Further, when connected, the guest device is only connected to the wireless network via the guest channel which may have different privileges to the administrative channel, such as a lack of access to guest connection information.

Modifying the DPP to support the use of intermediary control apparatus (which coordinates delivery of guest connection information to a guest device) may enable simple and/or improved onboarding of a guest device into a wireless network. The use of intermediary apparatus to assist guest device enrollment may ensure that guest devices are only connected to a guest channel and not provided with sensitive/private connection information associated with a private channel of the network. Embodiments may thus reduce or prevent exposure sensitive/confidential connection information for the wireless network.

Additionally, proposed concepts may support multiple intermediary devices, and thus improve scalability of a deployment. In some implementations, intermediary control apparatus may be coupled using a remote network while still assisting with the provisioning of guest devices to a network via an AP.

The AP may for example further comprise a channel monitoring module configured to change the guest connection information responsive to expiry events, and may be further configured to disconnect the guest device from the wireless network responsive to the guest connection information changing.

The guest connection information may be altered based on predetermined events. This means that guest devices cannot permanently possess the most up to date connection information, and thus cannot re-access the network indefinitely. In addition, this would prevent the guest device from passing such information onto other devices, leading those other devices to join the network without permission. Greatly improved network security may therefore be provided by embodiments of the invention.

Expiry events may be based, for example, on one or more of a maximum time allocations for the guest device to be connected to the wireless network being reached, a regular time interval being reached, or the guest device disconnecting from the wireless network.

The guest connection information may be updated (i.e. changed, modified or otherwise altered) when the guest device has been connected to the router for a pre-configured amount of time, which has the advantage of only allowing guest devices onto a network a certain amount of time. The guest connection information may also be updated at regular time intervals, which is a simpler method than the maximum time allocation as the maximum time allocation may require timers for each guest device. In addition, if the device disconnects from the network, the guest connection information may be changed so that the guest device may not reconnect without a new connection process being initiated. It may also be the case that all of the above are utilized.

The channel module may be further configured, for example, to set a channel network capability of the guest channel. For instance, the channel module may alter the network capability of the guest channel, such that guests can only access certain resources, properties and segments of the network. This may improve security of the network, and allow the administrator to have greater control over guests to the network.

In some embodiments, the channel module may be configured, for example, to set the channel network capability of the one or more of the plurality of network channels. In this way, other channels, such as the administrative channel and non-guest channels may be set to have access to different parts, or greater resources, of the network than the guest channel. The access point apparatus may have authority over all of these channels, allowing for greater control by the administrator of the network.

By way of example, the channel network capability may comprise a bandwidth and a network control authority. More specifically, the network capability may include a bandwidth and a network control authority. If the device is administrative, a large bandwidth and expansive network control may be required. For a guest, minimal network controls may be necessary, and it may be preferable to restrict the bandwidth.

The channel module may be further configured, for example, to support a plurality of different guest channels. In this way, there may be a plurality of different guest channels, of which each channel may have a unique channel network capability. As a result, different guest devices may be assigned to different guest channels, such as smart home devices for one channel, and guest laptops in another.

According to examples in accordance with another aspect of the invention, there is provided a control apparatus for controlling connection of a guest device to a wireless network comprising an access point apparatus according to a device provisioning protocol, DPP, the access point apparatus supporting a plurality of network channels including an administrative channel and a guest channel, the control apparatus comprising:
a AP interface module configured to send a guest connection request to the access point apparatus via the administrative channel and to receive from the access point, responsive to the guest connection request, guest connection information of the guest channel via the administrative channel,
a guest interface module configured to communicate the received guest connection information to the guest device,
wherein the guest connection information comprises data for facilitating connection of the guest device to the wireless network via the guest channel.

The guest interface module may be further configured, for example, to establish a secure channel connection with the guest device responsive to receiving guest connection information, and communicate the guest connection information to the guest device via the secure channel connection.

A secure connection may be established between the controller module and the guest device in order to communicate the guest connection information. This may be achieved in a QR code method as defined in the DDP method, or an out of band method such as Bluetooth.

The guest device may connect to, for example, the wireless network via the guest channel responsive to receiving the guest connection information.

The data for facilitating connection of the guest device may, for example, comprise an SSID and a key based connector.

According to examples in accordance with another aspect of the invention, there is provided a method for connecting a guest device to a wireless network according to a device provisioning protocol, DPP, the method comprising:
controlling an access point apparatus to establish a plurality of network channels, wherein the plurality of network channels comprises an administrative channel and a guest channel;
receiving guest connection information of the guest channel at a control apparatus from the access point apparatus via the administrative channel; and
communicating the guest connection information from the control apparatus to the guest device,
wherein the guest connection information comprises data for facilitating connection of the guest device to the wireless network via the guest channel.

The access point apparatus may be controlled, for example, to set a channel network capability of the guest channel, wherein the channel network capability comprises a bandwidth and a network control authority.

The method for connecting a guest device to a wireless network may, for example, further comprise determining an expiry event, controlling the access point apparatus to change the guest connection information based on the determination, and controlling the access point apparatus to disconnect the guest device from the wireless network responsive to controlling the access point apparatus to change the guest connection information.

Determining an expiry event may, for example, comprise one or more of, determining a maximum time allocation for the guest device to be connected to the wireless network being reached, determining a regular time interval being reached, or determining that the guest device is disconnected from the wireless network.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a simplified diagram of an exemplary embodiment of a system adapted for facilitating the connection of a guest device to a wireless network according to a DPP;
Figure 2 shows a sequence of events for connecting a guest device to a wireless network using an access point and a control apparatus according to a DPP;
Figure 3 is a block diagram representing the access point, control apparatus and guest device, and how these devices are connected via channels; and
Figure 4 is a flowchart depicting a method for connecting a guest device to a wireless network according to a DPP.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to connecting a guest device to a wireless network based on a DPP. According to proposed concepts, a number of possible solutions may be implemented separately or jointly. That is, although these possible solutions may be described below separately, two or more of these possible solutions may be implemented in one combination or another.

The term "DPP-based Wi-Fi network" refers to a network formed by multiple Wi-Fi device such that at least one of the Wi-Fi repeaters is capable of acting or otherwise functioning as a DPP configurator.

The term "smart device" refers to a device that is capable of reading QR code information present on a Wi-Fi repeater as well as connecting to a wireless access point (AP).

The terms "configured device" or "enrolled device" refer to a device that is onboarded in a wireless network (e.g., DPP-based Wi-Fi repeater network or MAP-R2 network) using a DPP mechanism. A configured (or enrolled) device is capable of acting or otherwise functioning as a DPP initiator.

The terms "unconfigured device" and "enrollee device" refer to a device that is not yet onboarded into the wireless network. Thus, a new device that is not yet configured for a network may be referred to as an enrollee device.

A DPP may be used to facilitate configuration of an enrollee device being introduced to the network. For example, the DPP may provide authentication and authenticated key establishment between the enrollee device and a configurator device. A configurator device provides the configuration used by the enrollee device to join the network. Each of the enrollee device and the configurator device may have associated authentication data (e.g. a public bootstrap key (also sometimes referred to as a "public identity key")) which is trusted between the devices and which can be used for an initial authentication. In some implementations, the authentication data is used for generating a temporary provisioning key.

The invention proposes an access point apparatus, a control apparatus and a method for facilitating connection of a guest device to a wireless network, which may improve the security of the network and the control the network has over the network resources available to the guest device. In particular, it is proposed to support a plurality of network channels, including: (i) an administrative channel via which a control device can access guest connection information; and (ii) a guest channel which the guest device may connect to using the guest connection information. In this way, the guest device may be prevented from directly interacting with the access point apparatus prior obtaining guest connection information. Further, according to proposed concepts, all communications with the guest device prior to connection to the guest channel may be handled by the control apparatus acting as an intermediary.

In some implementations, the control apparatus may comprise a legacy device. A legacy device refers to any device which is does not natively support the DPP or which is not capable of utilizing the DPP for its own network configuration. However, the legacy device may be capable of executing a client application which can communicate with a service of the AP. Therefore, even though the legacy device does not implement the DPP, the client application running on the legacy device may still be used to facilitate the control of connection of a guest device.

Purely by way of example, a proposed embodiment for supporting guest device configuration may comprise:
(i) an access point apparatus (e.g. a router) which supports multiple network channels that may be use synchronously with different capabilities and/or authorizations - for example, one administrative channel which can communicate connection information for other network channels, and one or more other network channels with configurable capability; and
(ii) A process to control network configuration for guest devices.

An exemplary process may be summarized as follows:
(a) control apparatus connects to the administrative channel and sends a message to the AP to request current guest connection information for a guest channel;
(b) the AP sends a response to the control (via the administrative channel), the response including the guest connection information;
(c) the control access builds a connection with the guest device, e.g. through the QR code way in DPP, and sends the guest connection information to the guest device;
(d) The guest device uses the guest connection to configured a guest network connection with the AP.

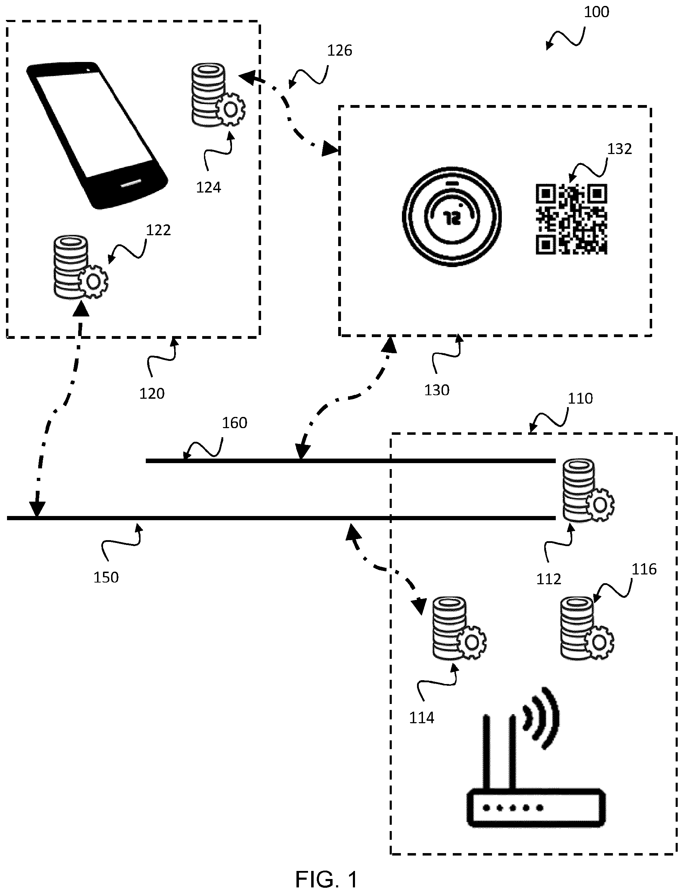

Referring now to Figure 1, there is depicted a simplified diagram of an exemplary embodiment of a system 100 adapted for facilitating the connection of a guest device 130 to a wireless network according to a DPP. The system 100 comprises an AP 110, a control apparatus 120, and a guest device 130.

Specifically, in this example, the AP 110 comprises a channel module 112, a communication module 114, and a channel monitoring module 116.

The channel module 112 is configured to support a plurality of network channels. Namely, this includes at least one administrative channel 150 and at least one guest channel 160.

In some embodiments, the channel module 112 may also further configured to set a channel network capability of the guest channel 160, or a different network capability for each of the plurality of network channels. In this way, the privileges of each channel, and the resources accessible by each channel, may be individually adjusted by the channel module 112. For example, each channel network capability may comprise a bandwidth and a network control authority.

The communication module 114 is configured to receive a guest connection request from the control apparatus 120 via the administrative channel 150. Further to this, responsive to receiving the guest connection request, the communication module 114 is configured to communicate guest connection information of the guest channel 160 to the control apparatus 120 via the administrative channel 150. The guest connection information comprises data for facilitating connection of the guest device 130 to the wireless network via the guest channel 160. The data for facilitating connection of the guest device 130 may comprise an SSID and a key based connector

In this example, the control apparatus 120 acts as an intermediary between the guest device 130 and the AP 110, with communication handled via the administrative channel 150. This means that the guest device 130 does not connect to the administrative channel 150 in order to access the guest connection information. In this way, the security of the administrative channel 150 may be improved.

The channel monitoring module 116 is configured to change the guest connection information responsive to expiry events. Expiry events may be based on a number of different criteria being reached. This may include, but is not restricted to a maximum time allocation for the guest device 130 to be connected to the wireless network being reached, a regular time interval being reached, or the guest device 130 disconnecting from the wireless network.

**In** some embodiments of the proposed invention, the channel monitoring module 116 may be further configured to disconnect the guest device 130 from the wireless network responsive to the guest connection information changing. As a result of this, network security may be improved, as guest devices 130 are removed from the wireless network when the guest connection information obtained by them has become invalid.

As previously mentioned, the system 100 of figure 1 also comprises control apparatus 120. This control apparatus 120 is configured to control connection of the guest device to the wireless network, specifically comprising an AP interface module 122, and a guest interface module 124.

The AP interface module 122 is configured to send the guest connection request to the AP 110 via the administrative channel 150. In addition, the AP interface module 122 is also configured, responsive to sending the guest connection request, to receive guest connection information of the guest channel 160 via the administrative channel 150, from the AP 110.

The guest interface module 124 is configured to communicate the received guest connection information to the guest device 130. This guest connection information comprises data for facilitating connection of the guest device 130 to the wireless network via the guest channel 160.

In some embodiments, the guest interface module 124 is further configured to establish a secure channel connection 126 with the guest device 130 responsive to receiving guest connection information, and communicate the guest connection information to the guest device 130 via the secure channel connection 126. This secure channel connection 126 may be established using a QR code 132 by which a wifi channel may be built up as in the DPP standard.

The guest device 130 is configured to connect to the wireless network via the guest channel 160 responsive to receiving the guest connection information. The guest device 130 could be, for example, a smart home type device, or a laptop or other personal computing device.

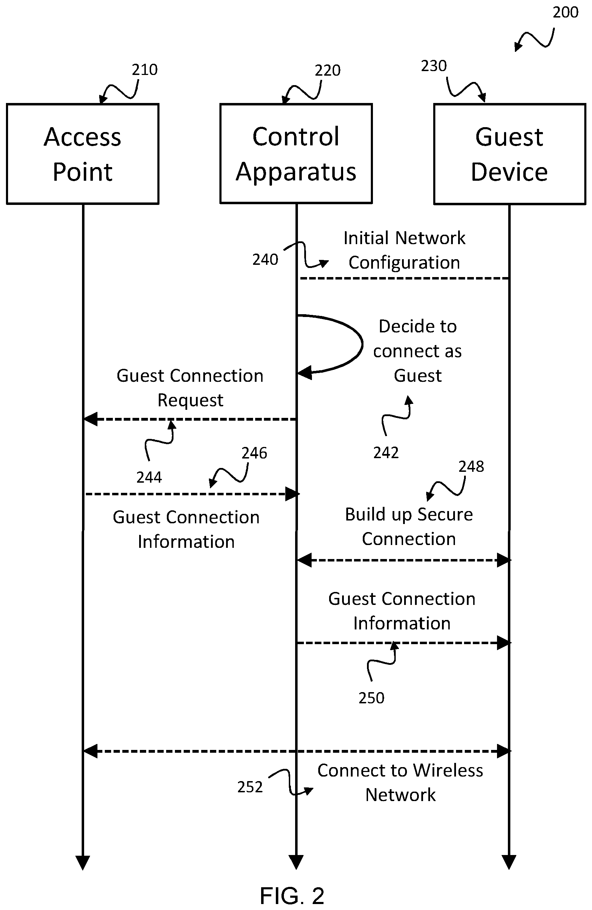

Figure 2 shows a sequence of events 200 by which a guest device 230 connects to a wireless network according to a DPP, in accordance with the invention. This is achieved using an access point 210 and a control apparatus 220.

To begin, the control apparatus 220 and guest device 230 may perform an initial network configuration 240. This may be achieved by scanning a QR code associated with the guest device 230, by selection on a user interface, or by any means appropriate for beginning a guest device connection routine.

After this initial network configuration 240 has been performed, it may be decided at the control apparatus 220 whether to connect the guest device 230 to the wireless network as a guest 242. This decision 242 may be made by a user selection method, for example on an application hosted by the control apparatus. Alternatively, the decision 242 may be pre-determined based on the information exchanged during the initial network configuration 240. If the guest device 230 is instead another type of enrollee device, then a different connection method may be performed.

Upon deciding to connect the guest device 230 as a guest, the control apparatus 220 sends a guest connection request 244 to the access point 210. This guest connection request 244 is sent via an administrative channel. All devices connected to the administrative channel may have the privilege to obtain connection information of each of a plurality of channels, including one or more guest channels. As the control apparatus 220 is connected to the administrative channel, the access point 210 determines that the control apparatus 220 should have access to the guest connection information, and sends the guest connection information 246 to the control apparatus 220.

Alternatively, the access point 210 may be further configured to determine whether the control apparatus 220 has the authority to access the connection information, and may decide to transmit the guest connection information 246 to the control apparatus 220 based on this determination.

Responsive to receiving the guest connection information 246, the control apparatus 220 may build a secure connection 248 with the guest device 230. The connection may be a Wi-Fi channel established through obtaining a QR code associated with the guest device 230 as defined in a DPP. Alternatively, the connection may be established through an out-of-band channel such as, for example, Bluetooth. A further alternative may be for the connection to be established by a software access point (SoftAP) created by the guest device.

The guest connection information is sent 250 to the guest device 230 from the control apparatus 220. This transmission may be through the established secure connection. The guest connection information comprises data for facilitating connection of the guest device 230 to the wireless network via the guest channel. In other words, the guest connection information includes information necessary for the guest device 230 to establish a connection with the guest channel of the wireless network.

The guest device 230 may then connect to the guest channel of the wireless network 252. It should be noted that before this event, there was no direct communication from the access point 210 to the guest device 230 via the wireless network. In this way, the security of the wireless network may be greatly improved.

The guest connection information may be an SSID and a key based connector as defined in the DPP standard. Alternatively, the guest connection information may be an SSID and a passphrase as defined in legacy devices.

Further to the above, the guest connection information may be regularly changed. This may occur once per day, once per week, or at any other appropriate time interval. The guest connection information may also be changed in response to a number of events. For example, the guest connection information may be updated whenever a guest device 230 is disconnected from the wireless network, such that the guest device 230 cannot reconnect without obtaining new guest connection information from the control apparatus 220. The guest connection information may also be changed responsive to the guest device 230 being connected to the wireless network for a certain length of time. This length of time may be pre-configured by the access point 210, or may be dynamically set by the control apparatus 220 based on information associated with the guest device 230.

In other words, there are some guest devices 230 that the user may only want to temporarily connect to the wireless network. In addition, it may not be preferable for said guest device 230 to permanently store the current guest connection information so that it may permanently connect forever, or even distribute the guest connection information to other devices. This problem may be overcome by updating the guest connection information in response to expiry events.

It should be clear to a person skilled in the art that guest connection information update events are not limited to the examples stated, and could be any event appropriate to improve the security of the network. In addition, the guest connection information may be updated responsive to any combination of events.

The control apparatus 220 may be, for example, a mobile phone or other smart device. The guest device 230 may be a smart home device such as a light switch, a speaker or a thermostat. The access point 210 may be a component of a router of the wireless network, or may be a standalone device. The wireless network may be a Wi-Fi network, or more specifically a DPP-based Wi-Fi network.

To paraphrase the above, the beginning of connection may start with an action to initialize the network provisioning 240. For example, this may be by scanning a QR code, or a user selecting to start in an application on the control apparatus. The user may then decide that they want to configure the device such that it will connect to a guest channel of the wireless network 242. This may be set in an application on the control apparatus.

Upon this decision, the control apparatus 220 sends a guest connection request 244 to the access point 210, which indicates a request for guest connection information. The control apparatus 220 is connected to the administrative channel of the wireless network - which means that the access point 210 shall determine that it has the right to obtain the guest connection information of other wireless network channels of the wireless network, including guest channels. Therefore, the access point 210 sends the current guest connection information 246 of the guest channel to the control apparatus 220.

The guest connection information may comprise an SSID and a key based connector as defined in the DPP standard, or in the case of legacy devices, an SSID and a passphrase. In order to improve the security of the wireless network, the guest connection information of the guest channel may be automatically changed regularly, such as, for example, every day. It may also be the case that the access point 210 creates a new guest channel responsive to a new guest device 230 requesting to join the network. In this circumstance, one-time guest connection information, with an associated overdue time pre-configured for the guest device 230 may be created. Alternatively, the overdue time may be dynamically set by the control apparatus 220.

When the control apparatus 220 receives the guest connection information of the guest network, the control apparatus 220 may start to build up a secure channel 248 with the guest device 230. For example, this may be achieved through a QR code by which a Wi-Fi channel may be built up as in the DPP standard. It may also possible that the secure channel is built up in by a SoftAP which is created by the guest device, or alternatively an out-of-the-band channel such as Bluetooth.

When the secure channel is successfully built up, the control apparatus 220 sends the guest connection information 250 to the guest device 230. As a result, the guest device 230 is then able to connect 252 to the access point 210.

The guest device 230 may disconnect from the wireless network after a period of time. After it disconnects the guest device 230 may no longer have the current guest connection information if it attempts to reconnect to the wireless network. Therefore, the guest device 230, control apparatus 220, and access point 210 may need to perform the whole process of connecting to the wireless network again in order to re-connect the guest device 230 to the wireless network.

The guest device 230 may be a smart home device, or may be another device, for example a phone, a tablet of a laptop.

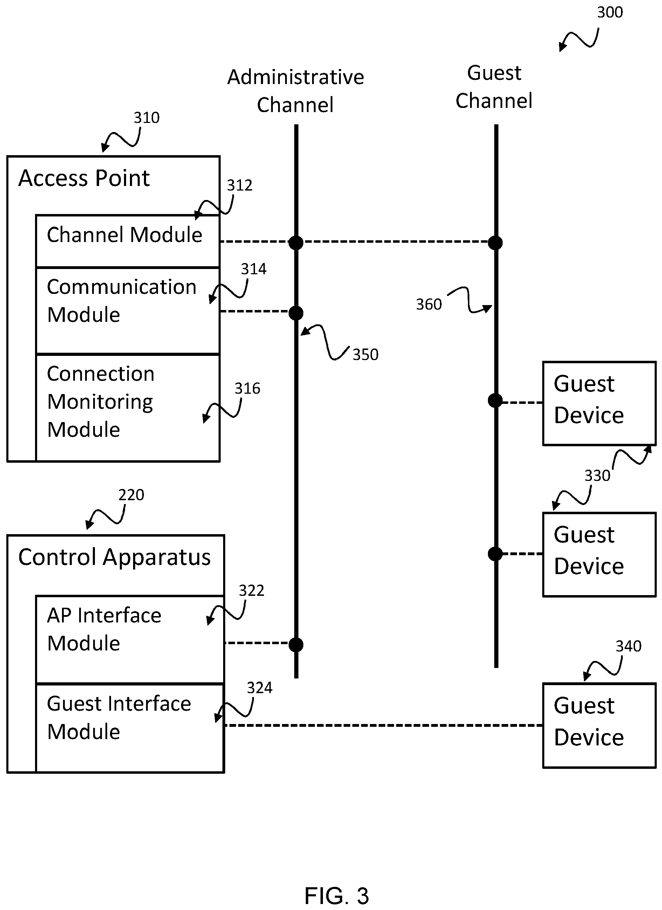

Figure 3 is a block diagram 300 representing the access point 310, control apparatus 320 and two guest devices 330 connected to the guest channel 360, and one guest device during the connection process 340. The block diagram 300 further represents how these devices are connected via channels in accordance with the invention.

The access point 310 comprises a channel module 312, which is configured to support a plurality of channels including an administrative channel 350 and a guest channel 360. The channel module 312 may be further configured to set a channel network capability of the guest channel 360. As a result, the guest channel 360 may have privileges that are different to that of other channels, thus restricting the range of actions the guest devices connected to it 330 can perform on the wireless network. Further, the channel module 312 may also be configured to set the channel network capability of the plurality of network channels, which includes the administrative channel 350. In this way, the channels may be controlled by the channel module 312 to have a range of different network capabilities.

The channel network capability may include parameters such as a channel bandwidth, or a network control authority. For example, the administrative channel 350 may have a large bandwidth to ensure a highly stable connection for all devices connected, as well as full network control authority to be able to edit the network, block certain devices from the network, re-configure the network. At the same time, the guest channel 360 may have a low bandwidth and no network control authority. This means that the security of the network is increased as guest devices 330 do not have control over the network. In addition, for guest devices 330 which only require a small bandwidth, such as smart switches, a guest channel 360 with only a small bandwidth may prove desirable. This is because a bandwidth of the whole network may be more effectively assigned.

The channel module 312 may be further configured to support a plurality of guest channels 360. In this way, guest devices 330 may be separated into sub-categories. If the channel module 312 also has the capability to set the channel network capability of each of these guest channels 360 individually, guest devices 330 may be assigned to guest channels 360 with an appropriate channel network capability. For example, low bandwidth devices, such as smart switches, may be connected to the wireless network via a first guest channel with a corresponding low bandwidth, while guest devices requiring a high bandwidth, such as laptops and smartphones, may be connected to the wireless network via a second guest channel with a relatively high bandwidth.

The access point 310 further comprises a communication module 314, which is configured to connect the access point 310 to the administrative channel 350. Through this connection the communication module 314 is configured to receive guest connection requests from the control apparatus 320. In addition, the communication module 314 is configured to communicate connection information of the guest channel 360 to the control apparatus 320 responsive to receiving a guest connection request. The communication module 314 may be further configured to determine an appropriate guest channel 360 for the guest device 330 to be connected to, and communicate the guest connection information associated with the appropriate guest channel 360 to the control apparatus 320.

The access point 310 may further comprise a connection monitoring module 316 configured to update the guest connection information. The connection monitoring module 316 may update guest connection information of a guest channel 360 responsive to one or more expiry events. The channel monitoring module 316 may optionally be configured to disconnect guest devices 330 connected to a guest channel 360 from the wireless network responsive to the guest connection information of the associated guest channel 360 changing.

The expiry event may be a maximum time allcoation for the guest device 330 to be connected to the network being reached. This means that guest devices 330 may only be connected to the network for a certain period of time. This period of time may be preconfigured by the channel monitoring module 316, or dynamically set based on the guest device 330. Alternatively, the expiry event may be a regular time interval being reached. For example, the guest connection infomration may be updated regulalry once an hour, once a day or once a week. As another option, the expiry event may be whenever a guest device 330 disconnects from the wireless network. It should be understood that one or more of the above could be used as expiry events, and that these examples are not an exhaustive list of possible expiry events.

Changing the guest connection information due to expiry events may improve the security of the wireless network. This is because guest devices 330 may not be able to store the current guest connection information indefinitely, and therefore rejoin the network indefinitely without permission. In addition, it reduces the chance that the guest device 330 may disclose guest connection information to other devices.

The control apparatus 320 acts as an intermediary between the access point 310 and an unenrolled guest device 340. The control apparatus 320 comprises an AP interface module 322 configured to transmit a guest connection request to the access point 310, or more specifically to the communication module 314 of the access point 310 via the administrative channel 350. The AP interface module 322 is also configured to receive the guest connection information from the access point 310 via the administrative channel 350.

The control apparatus 320 further comprises a guest interface module 324. The guest interface module 324 is configured to communicate the guest connection information to the unenrolled guest device 340 responsive to receiving the information from the access point 310. The guest interface module 324 may be further configured to establish a secure connection with the guest device 340 prior to communicating the guest connection information, and configured to subsequently communicate the guest connection information to the unenrolled guest device 340 via the secure connection.

The guest device 340 may be configured to connect to the wireless network responsive to receiving the guest connection information. The guest connection information comprises data for facilitating connection of the guest device 340 to the wireless network via an associated guest channel 360.

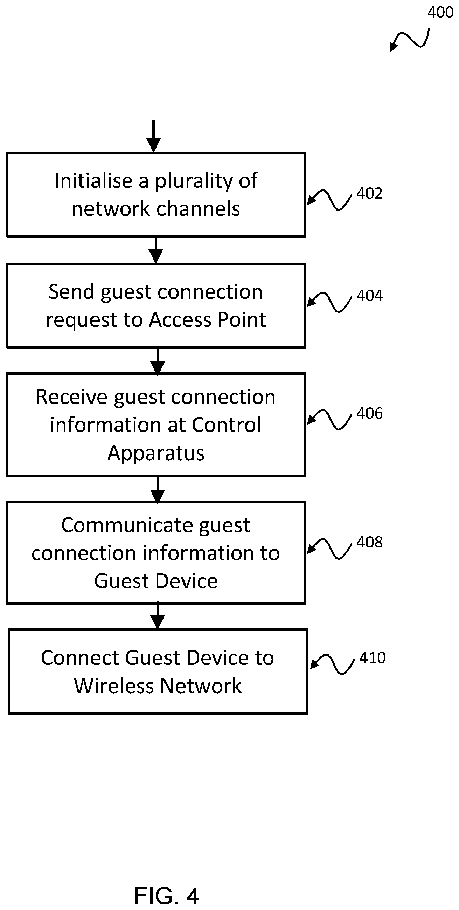

Figure 4 is a flow diagram 400 representing a method of connecting a guest device to a wireless network according to the invention.

In step 402, the channel module initialises a plurality of network channels of the network, including at least one administrative channel and at least one guest channel. The channel module may also set a channel network capability for each of the at least one guest channels, or may also set the channel network capability for each of the plurality of channels.

In step 404, the control apparatus communicates a guest connection request to the access point via an administartive channel.

In step 406, the access point communicates guest connection information to the control apparatus via the administrative channel. The guest connection information comprises data to facilitate onnection of the the guest device to the wireless network. The access point, or specifically the channel module may support multiple guest channels. If this is the case, then the access point may determine the guest channel which the guest device should connect to, and communicates the guest connection information of the determined guest channel. The determination may be based on the guest device type, or may be pre-determined.

In step 408, the control apparatus communicates the guest connection information to the guest device. This may be via a secure channel built up between the guest device and control apparatus using a QR code method as defined in a DDP, or by utilising an out-of-band method such as Bluetooth.

In step 410, the guest device may use the guest connection information to connect to the wireless network via a guest channel.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. An access point apparatus (110) for facilitating connection of a guest device (130) to a wireless network according to a device provisioning protocol, DPP, the access point apparatus comprising:
a channel module (112) configured to support a plurality of network channels, wherein the plurality of network channels comprises an administrative channel (150) and a guest channel (160); and
a communication module (114) configured to receive a guest connection request from control apparatus (120) via the administrative channel and, responsive to the guest connection request, to communicate guest connection information of the guest channel to the control apparatus via the administrative channel,
wherein the guest connection information comprises data for facilitating connection of the guest device to the wireless network via the guest channel.

2. The access point apparatus of claim 1, wherein the access point apparatus (110) further comprises:
a channel monitoring module (116) configured to change the guest connection information responsive to expiry events;
and wherein the channel monitoring module is further configured to disconnect the guest device (130) from the wireless network responsive to the guest connection information changing.

3. The access point apparatus of claim 2, wherein the expiry events are based on one or more of:
a maximum time allocation for the guest device (130) to be connected to the wireless network being reached;
a regular time interval being reached; or
the guest device disconnecting from the wireless network.

4. The access point apparatus of any preceding claim, wherein the channel module (112) is further configured to set a channel network capability of the guest channel (160).

5. The access point apparatus of claim 4, wherein the channel module (112) is further configured to set the channel network capability of the plurality of network channels.

6. The access point apparatus of claim 4 or 5, wherein the channel network capability comprises: a bandwidth and a network control authority.

7. The access point apparatus of any preceding claim, wherein the channel module (112) is further configured to support a plurality of different guest channels.

8. Control apparatus (120) for controlling connection of a guest device (130) to a wireless network comprising an access point apparatus (110) according to a device provisioning protocol, DPP, the access point apparatus supporting a plurality of network channels including an administrative channel (150) and a guest channel (160), the control apparatus comprising:
an AP interface module (122) configured to send a guest connection request to the access point apparatus via the administrative channel and to receive from the access point apparatus, responsive to the guest connection request, guest connection information of the guest channel via the administrative channel,
a guest interface module (124) configured to communicate the received guest connection information to the guest device,
wherein the guest connection information comprises data for facilitating connection of the guest device to the wireless network via the guest channel.

9. The control apparatus of claim 8, wherein the guest interface module (124) is further configured to establish a secure channel connection with the guest device (130) responsive to receiving guest connection information, and communicate the guest connection information to the guest device via the secure channel connection.

10. The control apparatus of any preceding claim, wherein the data for facilitating connection of the guest device comprises an SSID and a key based connector.

11. A method for connecting a guest device to a wireless network according to a device provisioning protocol, DPP, the method comprising:
controlling (402) an access point apparatus to establish a plurality of network channels, wherein the plurality of network channels comprises an administrative channel and a guest channel;
receiving a guest connection request from a control apparatus (120) via the administrative channel at the access point apparatus;
receiving (406) guest connection information of the guest channel at the control apparatus from the access point apparatus via the administrative channel; and
communicating (408) the guest connection information from the control apparatus to the guest device,
wherein the guest connection information comprises data for facilitating connection of the guest device to the wireless network via the guest channel.

12. The method of claim 11, further comprising controlling the access point apparatus to set a channel network capability of the guest channel, wherein the channel network capability comprises a bandwidth and a network control authority.

13. The method of claims 11 or 12, further comprising:
determining an expiry event;
controlling the access point apparatus to change the guest connection information based on the determination; and;
controlling the access point apparatus to disconnect the guest device from the wireless network responsive to controlling the access point apparatus to change the guest connection information.

14. The method of claim 13, wherein determining an expiry event comprises one or more of:
determining a maximum time allocation for the guest device to be connected to the wireless network being reached;
determining a regular time interval being reached; or
determining that the guest device is disconnected from the wireless network.

## Patentansprüche

1. Zugangspunkteinrichtung (110) zur Ermöglichung der Verbindung einer Gastvorrichtung (130) mit einem drahtlosen Netzwerk nach einem Vorrichtungsbereitstellungsprotokoll (DPP), wobei die Zugangspunkteinrichtung umfasst:
ein Kanalmodul (112), das zur Unterstützung mehrerer Netzwerkkanäle ausgebildet ist, wobei die mehreren Netzwerkkanäle einen administrativen Kanal (150) und einen Gastkanal (160) umfassen; und
ein Kommunikationsmodul (114), das so ausgebildet ist, dass es eine Gastverbindungsanfrage von der Steuereinheit (120) über den Verwaltungskanal empfängt und, in Reaktion auf die Gastverbindungsanfrage, Gastverbindungsinformationen des Gastkanals über den Verwaltungskanal an die Steuereinheit übermittelt,
wobei die Gastverbindungsinformationen Daten zur Erleichterung der Verbindung der Gastvorrichtung mit dem drahtlosen Netzwerk über den Gastkanal umfassen.

2. Zugangspunkteinrichtung nach Anspruch 1, wobei die Zugangspunkteinrichtung (110) weiter umfasst:
ein Kanalüberwachungsmodul (116), das so ausgebildet ist, dass es die Gastverbindungsinformationen in Abhängigkeit von Ablaufereignissen ändert;
und wobei das Kanalüberwachungsmodul weiter so ausgebildet ist, dass es die Gastvorrichtung (130) vom drahtlosen Netzwerk trennt, sobald sich die Gastverbindungsinformationen ändern.

3. Zugangspunkteinrichtung nach Anspruch 2, wobei die Ablaufereignisse auf einem oder mehreren der folgenden Faktoren basieren:
eine maximale Zeitvorgabe für die Gastvorrichtung (130) zur Verbindung mit dem drahtlosen Netzwerk erreicht wird;
ein regelmäßige Zeitintervall erreicht wird; oder
die Gastvorrichtung die Verbindung zum drahtlosen Netzwerk trennt.

4. Zugangspunkteinrichtung nach einem vorstehenden Anspruch, wobei das Kanalmodul (112) weiter so ausgebildet ist, dass es eine Kanalnetzwerkfähigkeit des Gastkanals (160) einstellt.

5. Zugangspunkteinrichtung nach Anspruch 4, wobei das Kanalmodul (112) weiter so ausgebildet ist, dass es die Kanalnetzwerkfähigkeit der Vielzahl von Netzwerkkanälen einstellt.

6. Zugangspunkteinrichtung nach Anspruch 4 oder 5, wobei die Kanalnetzwerkfähigkeit Folgendes umfasst: eine Bandbreite und eine Netzwerkkontrollberechtigung.

7. Zugangspunkteinrichtung nach einem vorstehenden Anspruch, wobei das Kanalmodul (112) weiter so ausgebildet ist, dass es eine Vielzahl unterschiedlicher Gastkanäle unterstützt.

8. Steuereinrichtung (120) zur Steuerung der Verbindung einer Gastvorrichtung (130) mit einem drahtlosen Netzwerk, das eine Zugangspunkteinrichtung (110) nach einem Einrichtungsbereitstellungsprotokoll, DPP, umfasst, wobei die Zugangspunkteinrichtung mehrere Netzwerkkanäle unterstützt, darunter einen administrativen Kanal (150) und einen Gastkanal (160), wobei die Steuereinrichtung Folgendes umfasst:
ein AP-Schnittstellenmodul (122), das so ausgebildet ist, dass es eine Gastverbindungsanfrage über den administrativen Kanal an die Zugangspunkteinrichtung sendet und als Reaktion auf die Gastverbindungsanfrage Gastverbindungsinformationen des Gastkanals über den administrativen Kanal von der Zugangspunkteinrichtung empfängt.
ein Gastschnittstellenmodul (124), das so ausgebildet ist, dass es die empfangenen Gastverbindungsinformationen an die Gastvorrichtung übermittelt,
wobei die Gastverbindungsinformationen Daten zur Erleichterung der Verbindung der Gastvorrichtung mit dem drahtlosen Netzwerk über den Gastkanal umfassen.

9. Steuereinrichtung nach Anspruch 8, wobei das Gastschnittstellenmodul (124) so ausgebildet ist, dass es beim Empfang von Gastverbindungsinformationen eine sichere Kanalverbindung mit der Gastvorrichtung (130) herstellt und die Gastverbindungsinformationen über die sichere Kanalverbindung an die Gastvorrichtung übermittelt.

10. Steuereinrichtung nach einem vorstehenden Anspruch, wobei die Daten zur Erleichterung der Verbindung der Gastvorrichtung eine SSID und einen schlüsselbasierten Anschluss umfassen.

11. Verfahren zum Verbinden einer Gastvorrichtung mit einem drahtlosen Netzwerk nach einem Vorrichtungsbereitstellungsprotokoll, DPP, wobei das Verfahren umfasst:
Steuern (402) einer Zugangspunkteinrichtung zur Einrichtung einer Vielzahl von Netzwerkkanälen, wobei die Vielzahl von Netzwerkkanälen einen administrativen Kanal und einen Gastkanal umfasst;
Empfangen einer Gastverbindungsanfrage von einer Steuereinrichtung (120) über den administrativen Kanal an der Zugangspunkteinrichtung;
Empfangen (406) von Gastverbindungsinformationen des Gastkanals an der Steuereinrichtung vom Zugangspunkt über den administrativen Kanal; und Übermitteln (408) der Gastverbindungsinformationen vom Steuergerät an die Gastvorrichtung.
wobei die Gastverbindungsinformationen Daten zur Erleichterung der Verbindung der Gastvorrichtung mit dem drahtlosen Netzwerk über den Gastkanal umfassen.

12. Verfahren nach Anspruch 11, weiter umfassend das Steuern der Zugangspunkteinrichtung zum Festlegen einer Kanalnetzwerkfähigkeit des Gastkanals, wobei die Kanalnetzwerkfähigkeit eine Bandbreite und eine Netzwerksteuerungsberechtigung umfasst.

13. Verfahren nach Anspruch 11 oder 12, weiter umfassend:
Feststellen eines Ablaufereignisses;
Steuern der Zugangspunkteinrichtung zur Änderung der Gastverbindungsinformationen auf Grundlage der ermittelten Werte; und;
Steuern der Zugangspunkteinrichtung zum Trennen der Gastvorrichtung vom drahtlosen Netzwerk, reagierend auf die Steuerung der Zugangspunkteinrichtung zum Ändern der Gastverbindungsinformationen.

14. Verfahren nach Anspruch 13, wobei das Bestimmen eines Ablaufereignisses eines oder mehrere des Folgenden umfasst:
Bestimmen einer maximalen Zeitzuweisung für die Gastvorrichtung, um sich mit dem erreichten drahtlosen Netzwerk zu verbinden;
Bestimmen, dass ein regelmäßiges Zeitintervall erreicht wird; oder
Bestimmen , dass die Gastvorrichtung nicht mit dem drahtlosen Netzwerk verbunden ist.

## Revendications

1. Appareil de point d'accès (110) permettant de faciliter une connexion d'un dispositif d'invité (130) à un réseau sans fil selon un protocole de provisionnement de dispositif, DPP, l'appareil de point d'accès comprenant :
un module de canal (112) configuré pour prendre en charge une pluralité de canaux de réseau, dans lequel la pluralité de canaux de réseau comprend un canal administratif (150) et un canal d'invité (160) ; et
un module de communication (114) configuré pour recevoir une demande de connexion d'invité d'un appareil de commande (120) via le canal administratif et, en réponse à la demande de connexion d'invité, pour communiquer des informations de connexion d'invité du canal d'invité à l'appareil de commande via le canal administratif,
dans lequel les informations de connexion d'invité comprennent des données permettant de faciliter une connexion du dispositif d'invité au réseau sans fil via le canal d'invité.

2. Appareil de point d'accès selon la revendication 1, dans lequel l'appareil de point d'accès (110) comprend en outre :
un module de surveillance de canal (116) configuré pour modifier des informations de connexion d'invité en réponse à des événements d'expiration ;
et dans lequel le module de surveillance de canal est en outre configuré pour déconnecter le dispositif d'invité (130) du réseau sans fil en réponse à un changement d'informations de connexion d'invité.

3. Appareil de point d'accès selon la revendication 2, dans lequel les événements d'expiration sont basés sur un ou plusieurs parmi :
une attribution de temps maximale pour que le dispositif d'invité (130) soit connecté au réseau sans fil étant atteinte ;
un intervalle de temps régulier étant atteint ; ou
le dispositif d'invité se déconnectant du réseau sans fil.

4. Appareil de point d'accès selon une quelconque revendication précédente, dans lequel le module de canal (112) est en outre configuré pour définir une capacité de réseau de canaux du canal d'invité (160).

5. Appareil de point d'accès selon la revendication 4, dans lequel le module de canal (112) est en outre configuré pour définir la capacité de réseau de canaux de la pluralité de canaux de réseau.

6. Appareil de point d'accès selon la revendication 4 ou 5, dans lequel la capacité de réseau de canaux comprend : une bande passante et une autorité de commande de réseau.

7. Appareil de point d'accès selon une quelconque revendication précédente, dans lequel le module de canal (112) est en outre configuré pour prendre en charge une pluralité de canaux d'invité différents.

8. Appareil de commande (120) permettant de commander une connexion d'un dispositif d'invité (130) à un réseau sans fil comprenant un appareil de point d'accès (110) selon un protocole de provisionnement de dispositif, DPP, l'appareil de point d'accès prenant en charge une pluralité de canaux de réseau, y compris un canal administratif (150) et un canal d'invité (160), l'appareil de commande comprenant :
un module d'interface AP (122) configuré pour envoyer une demande de connexion d'invité à l'appareil de point d'accès via le canal administratif et pour recevoir de l'appareil de point d'accès, en réponse à la demande de connexion d'invité, des informations de connexion d'invité du canal invité via le canal administratif,
un module d'interface invité (124) configuré pour communiquer les informations de connexion d'invité reçues au dispositif d'invité,
dans lequel les informations de connexion d'invité comprennent des données permettant de faciliter une connexion du dispositif d'invité au réseau sans fil via le canal d'invité.

9. Appareil de commande selon la revendication 8, dans lequel le module d'interface d'invité (124) est en outre configuré pour établir une connexion de canal sécurisée avec le dispositif d'invité (130) en réponse à la réception d'informations de connexion d'invité, et communiquer les informations de connexion d'invité au dispositif d'invité via la connexion de canal sécurisée.

10. Appareil de commande selon une quelconque revendication précédente, dans lequel les données permettant de faciliter une connexion du dispositif d'invité comprennent un SSID et un connecteur à clé.

11. Procédé de connexion d'un dispositif d'invité à un réseau sans fil selon un protocole de provisionnement de dispositif (DPP), le procédé comprenant les étapes consistant à :
commander (402) un appareil de point d'accès pour établir une pluralité de canaux de réseau, dans lequel la pluralité de canaux de réseau comprend un canal administratif et un canal d'invité ;
recevoir une demande de connexion d'invité provenant d'un appareil de commande (120) via le canal administratif au niveau de l'appareil de point d'accès ;
recevoir (406) des informations de connexion d'invité du canal invité au niveau de l'appareil de commande depuis l'appareil de point d'accès via le canal administratif ; et communiquer (408) les informations de connexion d'invité de l'appareil de commande au dispositif d'invité,
dans lequel les informations de connexion d'invité comprennent des données permettant de faciliter une connexion du dispositif d'invité au réseau sans fil via le canal d'invité.

12. Procédé selon la revendication 11, comprenant en outre une commande de l'appareil de point d'accès pour définir une capacité de réseau de canaux du canal d'invité, dans lequel la capacité de réseau de canaux comprend une bande passante et une autorité de commande de réseau.

13. Procédé selon la revendication 11 ou 12, comprenant en outre les étapes consistant à :
déterminer un événement d'expiration ;
commander l'appareil de point d'accès pour changer les informations de connexion d'invité sur la base de la détermination ; et ;
commander le point d'accès pour déconnecter le dispositif d'invité du réseau sans fil en réponse à la commande de l'appareil de point d'accès pour changer les informations de connexion d'invité.

14. Procédé selon la revendication 13, dans lequel la détermination d'un événement d'expiration comprend un ou plusieurs des éléments suivants :
déterminer une attribution de temps maximale pour que le dispositif d'invité soit connecté au réseau sans fil étant atteinte ;
déterminer qu'un intervalle de temps régulier est atteint ; ou
déterminer que le dispositif d'invité est déconnecté du réseau sans fil.
